# EUROPEAN PATENT SPECIFICATION

(11) **EP 0 557 828 B1**
(45) Date of publication and mention of the grant of the patent: **26.07.1995**
(21) Application number: 93102251.1
(22) Date of filing: 12.02.1993
(51) Int. Cl.: G01N 35/10, G01N 1/28

(54) **Pretreatment apparatus for use in analysis**
Aufbereitungsvorrichtung, zu verwenden in der Analyse
Dispositif de prétraitement pour analyses

(30) Priority: 22.02.1992 JP 72627/92
(43) Date of publication of application: 01.09.1993
(73) Proprietor: HORIBA, LTD., Minami-ku Kyoto (JP); TAKARA SHUZO CO. LTD., Fushimi-ku, Kyoto-shi, Kyoto-fu (JP)
(72) Inventor: Miki, Kojiro, Shiga-Prefecture (KP); Mori, Takeshi, Kyoto (KP); Ohkawa, Hiromi, Terada, Joyo-city (JP); Hosokawa, Yumi, Kyoto (JP); Kondo, Akihiro, Muko-city, Kyoto (JP); Kato, Ikunoshin, Uji-city, Kyoto (JP)
(74) Representative: TER MEER STEINMEISTER & PARTNER GbR

(56) References cited:
- FR-A- 2 129 254
- FR-A- 2 630 216
- US-A- 4 535 585
- M. VALCAREL & M.D. LUQUE DE CASTRO 'Techniques & instrumentation in analytical chemistry, Volume 9: Automatic methods of analysis' 1988 , ELSEVIER , AMSTERDAM, NL Chapter 9: 'Robots in the laboratory'
- CLINICAL CHEMISTRY vol. 32, no. 9, September 1986, WINSTON US pages 1672 - 1676 W.J. CASTELLANI ET AL. 'Robotic sample preparation evaluated for the immunochemical determination of cardiac isoenzymes'
- PATENT ABSTRACTS OF JAPAN vol. 15, no. 513 (M-1196) 26 december 1991 & JP-A-03 226 484 (SHIMADZU CORP.) 7 OCTOBER 1991
- PATENT ABSTRACTS OF JAPAN vol. 11, no. 513 (P-536) (2462) 16 JANUARY1987 & JP-A-61 189 457 (NIPPON KOKAN K.K.) 23 AUGUST 1986
- PATENT ABSTRACTS OF JAPAN vol. 15, no. 513 (M-1196)26 DECEMBER 1991 & JP-A-03 226 485 (SHIMADZU CORP,)7 OCTOBER 1991

## Description

### PRETREATMENT APPARATUS FOR USE IN ANALYSIS OF SUBSTANCES

### BACKGROUND OF THE INVENTION

### Field of the Invention

The present invention relates to an apparatus for a fully automatic pretreatment process of substances prior to their analysis, for example of sugars and the like.

### Description of the Prior Art

A fully automatic or robotic pretreatment apparatus of the art is described in M. Valcarcel and M.D. Luque de Castro, "Techniques and Instrumentation in Analytical Chemistry", Volume 9: Automatic Methods of Analysis, 1988, Elsevier, Amsterdam, N.L., Chapter 9: "Robots in the laboratory". Various stations required in pretreatment analysis of substances are disclosed. Among these stations of the pretreatment apparatus there are storing portions for reagent dispensing tips, for reagent containing vials and for sample vials, a unit for dispensing a reagent into the sample vial, a centrifugal stirrer for weighting said dispensed reagent and stirring the reagent and a sample, a heater for the stirred reagent and said sample, an evaporator for the reagent and sample, and a tip-separating means separating a tip held by said tip holder. A three-dimensionally movable work hand is used for manipulating the tip holder or the sample vial. However, a capping or uncapping function for capping and uncapping, respectively, vials and sample vials in the apparatus is not provided.

JP-A-3 226 484 discloses a cap opening and closing device for opening and closing a cap of a container by gripping the cap and the container and rotating the container with the cap held in a rotatably fixed position. A gripper of a manipulator grips the cap and moves it to a container to be rotated thereunder.

JP-A-3 226 485 discloses a cap opening and closing device similar to the above one, but with the container being held in a rotatably fixed position while the cap is now to be rotated. A robot hand locates the container and then moves it to the station where the cap for the container to be opened or closed is rotated for screwing and unscrewing, respectively.

A plural stages of steps method of conducting a fully automatic pretreatment prior to an analysis of sugars is known, in which for example sugar chains are isolated to be labelled with fluorescences, comprising
a first process steps sequence in which a sample vial is taken out of a storing portion of said sample vial, a screw cap of a mouth portion of the sample vial is removed to set the sample vial in a centrifugal stirrer, a reagent for example for pyridylamination is pipetted into the sample vial by means of a reagent-pipetting tip to be stirred, the sample vial is transferred to a heater after stirring to heat said stirred reagent and sample, and the heated sample vial is transferred to an evaporator where the excess for pyridylamination is removed;
a second process steps sequence in which the sample vial, from which the reagent has been evaporated away, is returned to said centrifugal stirrer, a reducing reagent is pipetted into the sample vial (with replacing said tip with a new one in order to prevent a contamination with the reagent used in the proceeding process) to be stirred, the sample vial is transferred to said heater for heating the sample, and the heated sample vial is returned to the centrifugal stirrer;
a third process steps sequence in which the tip is replaced again to pipet a first azeotropic reagent into the sample vial followed by stirring the tip is replaced similarly for pipetting of a second azeotropic reagent into the sample vial followed by being stirred, and the sample vial is transferred to said evaporator to conduct an evaporation followed by returning the sample vial to the centrifugal stirrer;
a fourth process steps sequence, in which third and fourth reagents are pipetted in turn, similar to said third process steps sequence; and
a fifth process steps sequence, in which the tip is replaced for pipetting the fifth azeotropic reagent into the sample vial to stirr the mixture, the sample vial is transferred to the evaporator to conduct an evaporation followed by closing said mouth portion of the sample vial by means of said screw cap, and the sample vial is returned to said storing portion.

However, this known pretreatment processing includes some troublesome manual operations requiring particular experience and skill such as removal and mounting of the screw cap from and on the mouth portion of the sample vial, replacement of the reagent-pipetting tip, pipetting of the reagents into the sample vial and transfer of the sample vial in the centrifugal stirrer, the heater and the evaporator. Accordingly, problems have occured in that the analysis pretreatment does not only take considerable time and the management of the process steps is difficult, but last not least the treatment conditions are poor in reproducibility.

### SUMMARY OF THE INVENTION

In recognition of the above outlined problems, it is an object of the present invention to provide a pretreatment apparatus for use with the analysis of specific substances, this, e.g. of sugars and the like, capable of fully-automatically conducting a series of pretreatments.

In order to achieve this object, a fully automatic pretreatment apparatus according to the present invention for use in connection with and for a substance analysis comprises a storing portion of reagent-pipetting tips, a storing portion of reagent-containing vials, a storing portion of sample vials, a chuck device of said sample vial chucking and rotating the sample vial, a unit for the pipetting of a reagent into the sample vial from which a cap has been removed, a centrifugal stirrer for weighting said pipetted reagent and stirring the reagent and a sample, a heater for the stirred reagent and said sample and an evaporator of the reagent and sample, which pretreatment apparatus is characterized in that said three-dimensionally movable work hand has two concave portions of different size formed in said work hand so that at least a holding of caps of said vials and a holding of said vials from which said caps have been removed is possible, said work hand separately manipulating a tip holder of said unit for pipetting a reagent into said sample vial, a cover of a reagent-containing vial, a screw cap of said sample vial and the sample vial from which said cap has been removed, respectively.

In a preferred embodiment, the unit for pipettting of a reagent into the sample vial contained in the above described pretreatment apparatus comprises the tip holder manipulated by said work hand and held in said storing portion in other processes than said pipietting of reagent, a pipetting pump and a flexible tube communicatingly connecting said pipetting pump to the tip holder.

In a further preferred embodiment said centrifugal stirrer comprises a vial-receiving member for receiving said sample vial and for moving said vial-receiving member at an appointed position, thereby inclining said vial-receiving member such that an inner wall of the sample vial inserted into that vial-receiving member can be brought into contact with the appointed end of said pipetting tip during pipetting.
With the pretreatment apparatus having the above described construction, troublesome manual operations can be avoided such as the removal and mounting of a screw cap from and on the mouth portion of the sample vial, replacement of the tip for the tip holder, pipetting of various kinds of reagent into the sample vial and transfer of the sample vial into various kinds of device, by a fully-automatically conducted and operated work hand.

In addition, in other processes different from said process of pipetting various kinds of reagent into the ample vial, the unit is held in the storing portion of the unit for pipetting of a reagent into the sample vial, so that the unit for pipetting of a regent into the sample vial and said tube does not hinder the movement of the sample vial with the result that the degree of freedom in arrangements and designs of various kinds of devices and storing portions is enhanced.

### BRIEF DESCRIPTION OF THE DRAWINGS

Fig. 1 is a front view showing main parts of a reagent-reacting and pretreatment apparatus according to the invention;
Fig. 2 is a rough plan view showing said reagent-reacting apparatus;
Fig. 3 is an operation diagram showing the reagent-reacting apparatus;
Fig. 4 is a diagram showing the construction of a unit for pipetting of a reagent into a sample vial;
Fig. 5 is a sectional view showing a head portion of said unit for pipetting of a reagent into said sample vial;
Fig. 6 is a sectional view showing a tip-housing case with a large number of tips housed therein;
Fig. 7 is a perspective view showing said tip-housing case and a holding portion of the tip-housing case;
Fig. 8 is a three-dimensionally illustrated plan view showing said holding portion of the tip-housing case according to another preferred embodiment with said main parts taken out;
Fig. 9 is a detailed drawing showing a reagent-contained vial and a fractionedly illustrated vial cover;
Fig. 10 is a diagram explaining a temporary placing of said cover on a cover-placing table;
Fig. 11 is a perspective view showing said reagent-contained vial, said cover and said cover-placing table;
Fig. 12 is a plan view showing a cover-placing member;
Fig. 13 is a diagram explaining a condition of a surface-engaged support of said cover-placing member on said vial cover;
Fig. 14 is a perspective view showing a chucking device with main parts perspectively illustrated;
Fig. 15 is a longitudinally sectioned side view showing said chucking device;
Fig. 16 is a longitudinally sectioned plan view showing the chucking device;
Fig. 17 is a diagram showing an opened condition of the chucking device;
Fig. 18 is a diagram showing a closed condition of the chucking device;
Fig. 19 is a side view showing a centrifugal stirrer with main parts fractioned;
Fig. 20 is a plan view showing said centrifugal stirrer;
Fig. 21 is a diagram explaining a relative striking at a container-receiving member with a sample vial inserted therein;
Fig. 22 is a diagram explaining a pipetting of a reagent into said sample vial;
Fig. 23 is a longitudinally sectioned side view showing a heater;
Fig. 24 is a longitudinally sectioned side view showing an evaporator; and
Fig. 25 is a longitudinally sectioned side view showing a washing device for a purge gas system of said evaporator.

### DETAILED DESCRIPTION OF THE PREFERRED EMBODIMENTS

The preferred embodiments of the present invention will be below described with reference to the drawings.

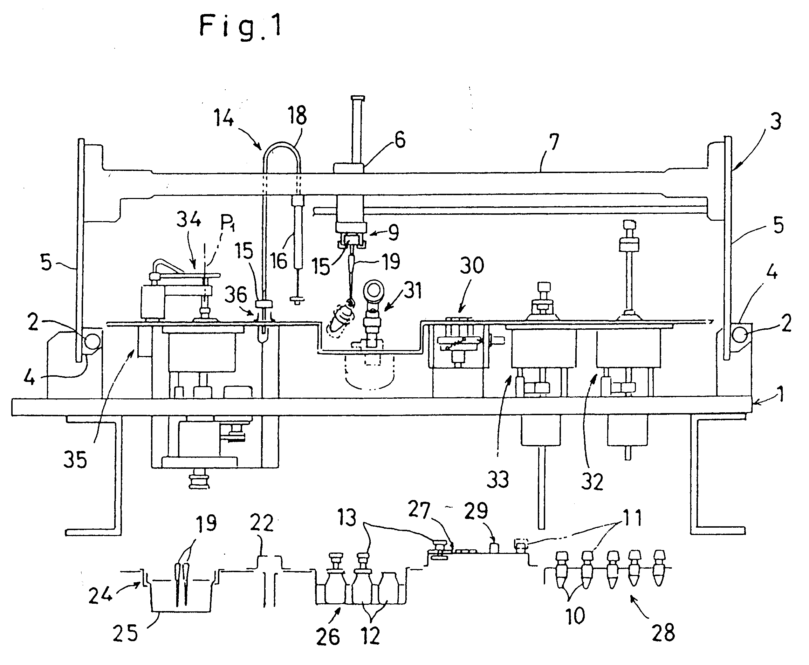

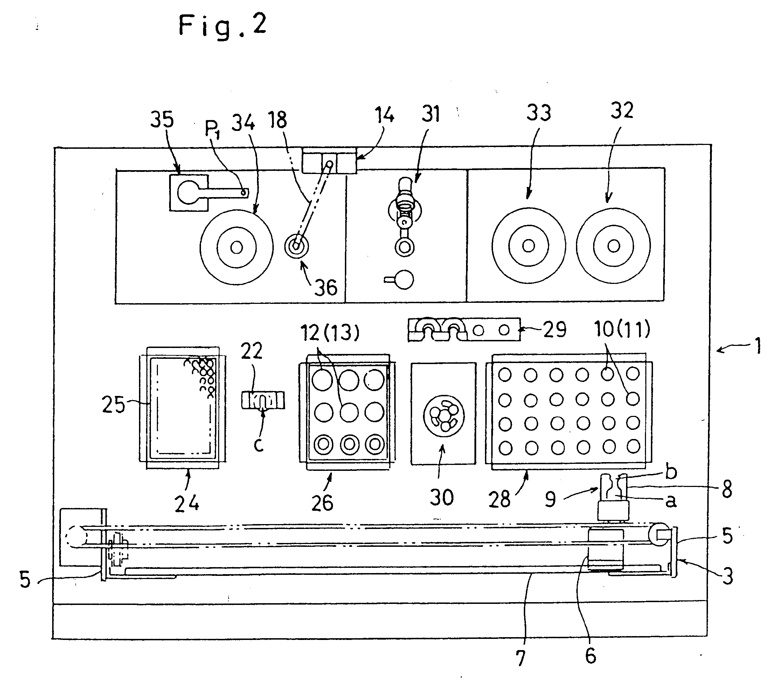

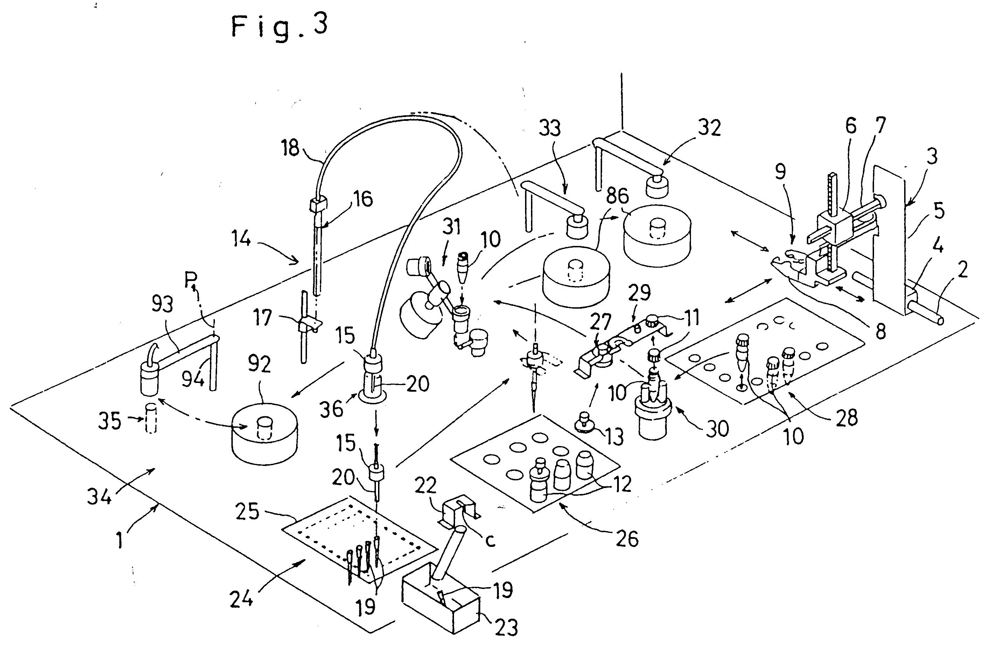

Figures 1 and 2 are the whole drawings showing a fully-automatic pretreatment apparatus used prior to an analysis of for example sugars and Fig. 3 is an operation diagram of said apparatus.

Referring to these drawings, reference numeral 1 designates a base of the apparatus and shafts 2 extending in the back and forth direction are arranged on both (right and left) sides thereof.

Reference numeral 3 designates a gate-type frame reciprocally movable in the back and forth directions and right and left leg members 5 of said gate-type frame 3 are mounted on said shafts 2 through a linear bearing 4.

Reference numeral 6 designates a slider reciprocally movable along a horizontal member 7 of the gate-type frame 3 and said slider 6 is provided with a work hand 9 consisting of a pair of fingers 8 openedly and closedly driven by a solenoid and the like (not shown) so as to ascend and descend.

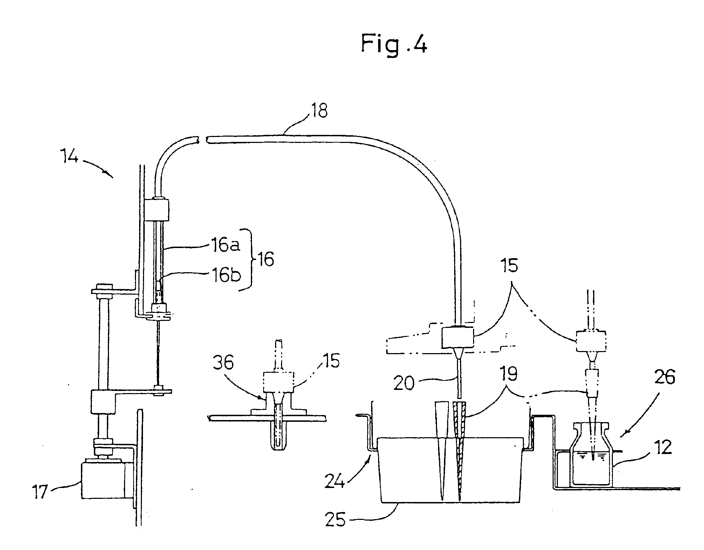

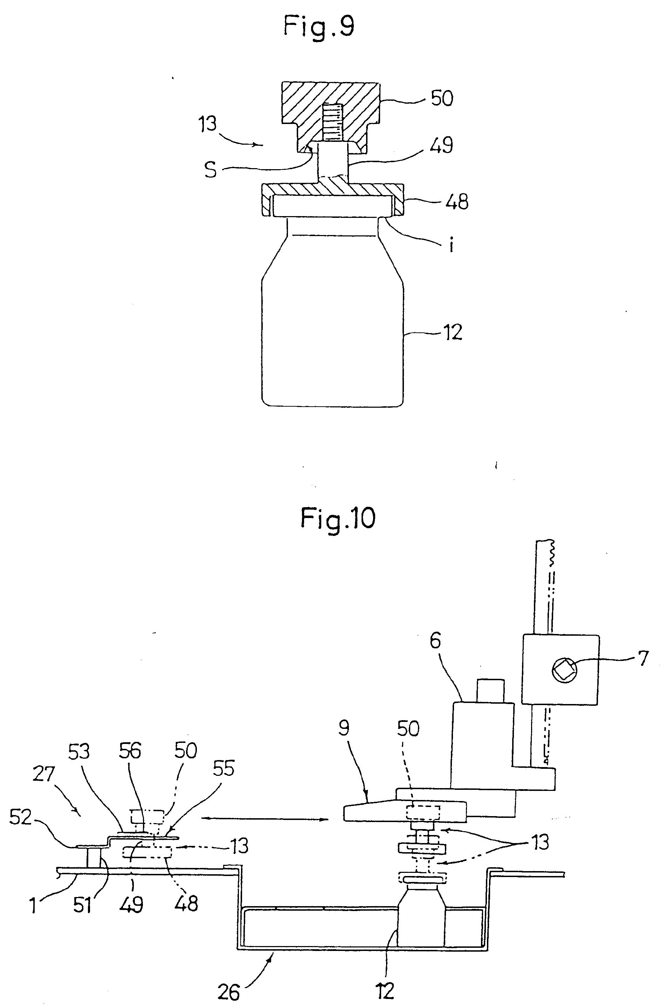

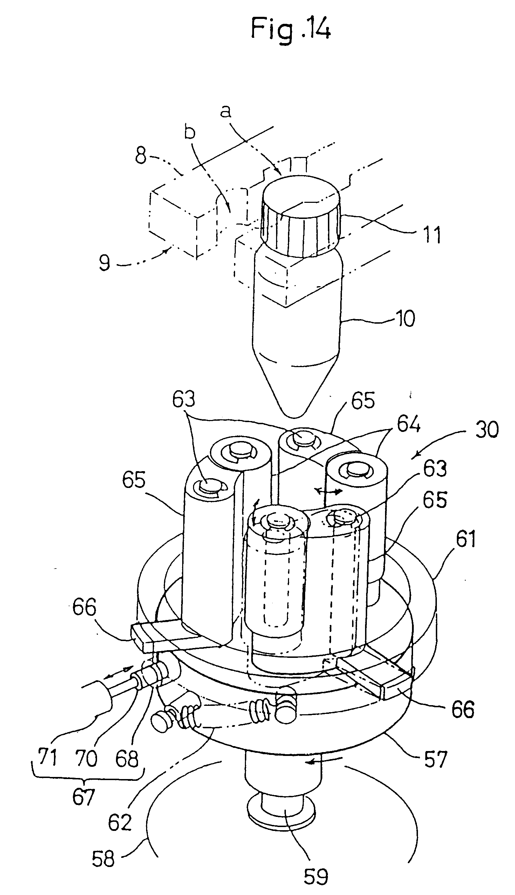

Said work hand 9 is provided with a first concave portion (a) for separately manipulating a screw cap 11 (refer to Fig. 14) screwed on a sample vial 10, a cover 13 (refer to Fig. 10) of a reagent-contained vial 12 and a tip holder 15 of a reagent-pipetting unit 14 (refer to Fig. 4), respectively, formed on the depth side thereof and a second concave portion (b) for manipulating said sample vial 10, from which said screw cap 11 has been removed, formed on the pointed end side thereof.

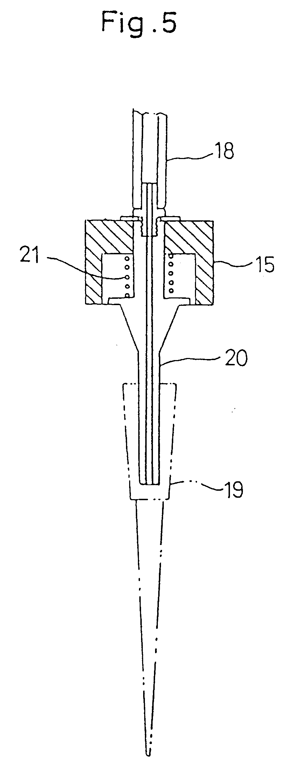

Said reagent-pipetting unit 14 comprises a pipetting pump 16 consisting of a cylinder 16a having a small diameter and a piston 16b connected with ascendedly and descendedly driving means 17, as shown also in Fig. 4, a flexible tube 18 connected with said pipetting pump 16 and a hollow tip-holding pipe 20 insertedly and elastically holding a tip 19 for pipetting a liquid reagent held by said holder 15 shiftably in the direction opposite to the direction in which said tip is inserted, through a spring 21, said tube 18 being connected with said tip-holding pipe 20, as shown in Fig. 5, so that the tip holder 15 may be caught by the work hand 9 merely in case of need and put in a storing portion 36 in other cases because the tube 18 hinders a movement of the work hand 9.

Next, reference numeral 22 designates tip-separating means provided with a slit (c), in which the tip-holding pipe 20 is to be inserted, so that the tip 19, which has been used, may be removed and the removed tip 19 may be collected in a case 23 by inserting the tip-holding pipe 20 in said slit (c) and lifting the holder 15 of the reagent-pipetting unit 14.

Reference numeral 24 designates a storing portion of the tip 19 held in a tip-housing case 25 and reference numeral 26 designates a container-storing portion, in which said reagent-containing vials 12 are arranged in three lines, provided with a table 27 for placing said covers 13 of the vials 12 thereon arranged along said line of vials on the rear side.

Reference numeral 28 designates a storing portion of sample vials 10 for storing said sample vials 10 with the cap 11 arranged in the right and left direction and a table 29 for temporarily placing the screw cap 11, which has been once removed, thereon is arranged along a line of the sample vials.

Reference numeral 30 designates a chucking device of the sample vial 10 used when the screw cap 11 is removed from and mounted on the sample vial 10 and reference numeral 31 designates a centrifugal stirrer for rotating the sample vial 10, from which the cap 11 has been removed and in which said liquid reagent has been pipetted, to weight and stir the reagent pipetted into the sample vial 10.

Reference numerals 32 and 33 designate heaters for promoting a reaction between the stirred sample and reagent and reference numeral 34 designates an evaporator for distilling away the reagent within the sample vial 10 and concentrating the sample within the sample vial 10. A washing device 35 of a purge system for an inside of the sample vial 10 is arranged in the vicinity of said evaporator 34 and a holder-storing portion 36 is arranged between the evaporator 34 and one heater 33.

Main constituent members in a reagent-reacting device having the above described construction and concrete constructions of the devices will be below described.

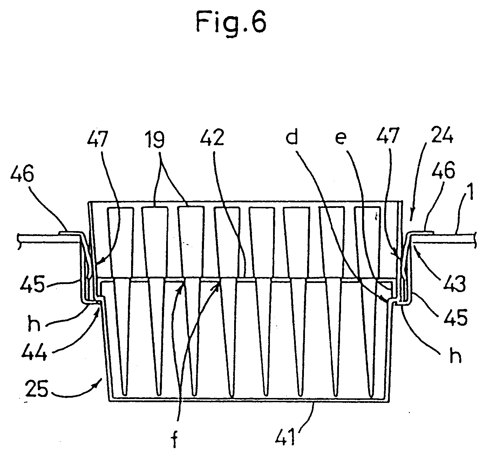

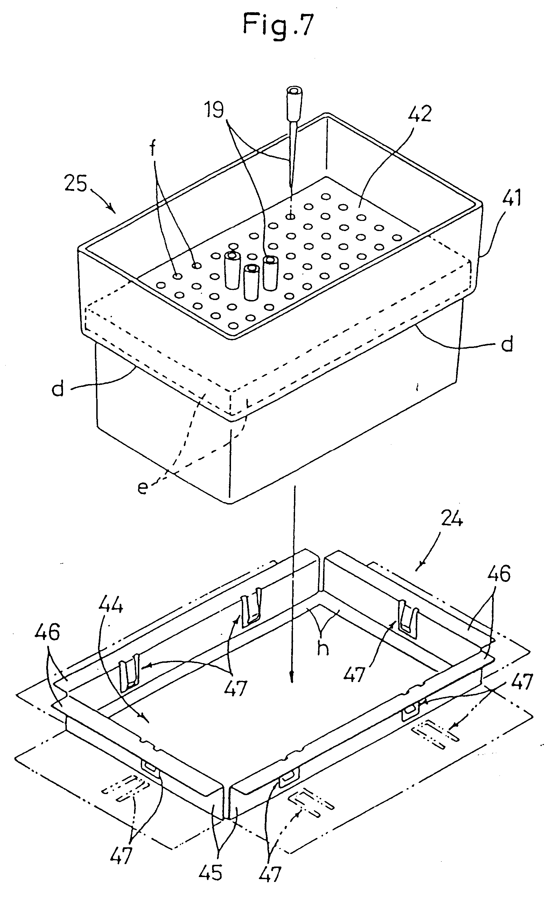

At first, said tip-housing case 25 is made of a synthetic resin, having a rectangular shape as seen on the plan view, and being provided with an outwardly bent stepped portion (d) formed midway between an upper portion and a lower portion of a case body 41 opened at said upper portion thereof, a downward bent piece (e) almost closely engaged with an expanded portion on an upper portion side of said case body 41 and connected with a circumferential portion of the case body 41 formed on a plate member 42 supported by said stepped portion (d) and tip-supporting holes (f) formed lengthwise and crosswise for supporting the stepped portion having a larger diameter of the tip 19, as shown in Figures 6 and 7.

On the other hand, said storing portion 24 of said case 25 is closely engaged with an opening 43 formed in the base 1 of the apparatus and comprises a supporting surface (h) of the stepped portion (d) formed around an opening 44 by forming said opening 44, through which a lower portion side of the tip-housing case 25 is to loosely passed, in a metallic plate material, from which four corners have been removed, as shown by a two-dot chain line in Fig. 7, a box-shaped portion, which is to be elastically engaged with said opening 43 of the base 1, formed by standing four sides of said plate material so as to be slightly expanded and flanges 46 formed by outwardly bending upper portion sides of the respective standing plate portions 45 for supporting an upper surface 46 around the opening 43 of the base 1.

And, a U letter-shaped notch is formed in a middle portion in the longitudinal direction of the standing plate portions in the short side direction and on both sides in the longitudinal direction of the standing plate portions in the long side direction and a portion surrounded by said notches are slightly expanded in said box-shaped portion being bent to form elastic holding means 47 for elastically and energizedly holding an upper portion side of the tip-housing case 25.

With the storing portion 24 having the above described construction, the stepped protion (d) of the tip-housing case 25 is supported on said supporting surface (h), so that a height of the tip 19 relative to the base 1 of the apparatus and thus the work hand 9 can be regulated in an appointed manner.

And, said four sides of the tip-housing case 25 supported on the supporting surface (h) are apt to be pressed by said elastic holding means 47, so that a center of the case and thus a center of the tip held by said plate member 42 can be always positioned at an appointed position even though an outside size of the tip-housing case 25 is different to some extent due to an error of production.

That is to say, since a position, where the tip 19 is held, is always unchanged, automatic manipulating of the tip by means of the work hand 9 can be achieved in an appointed manner.

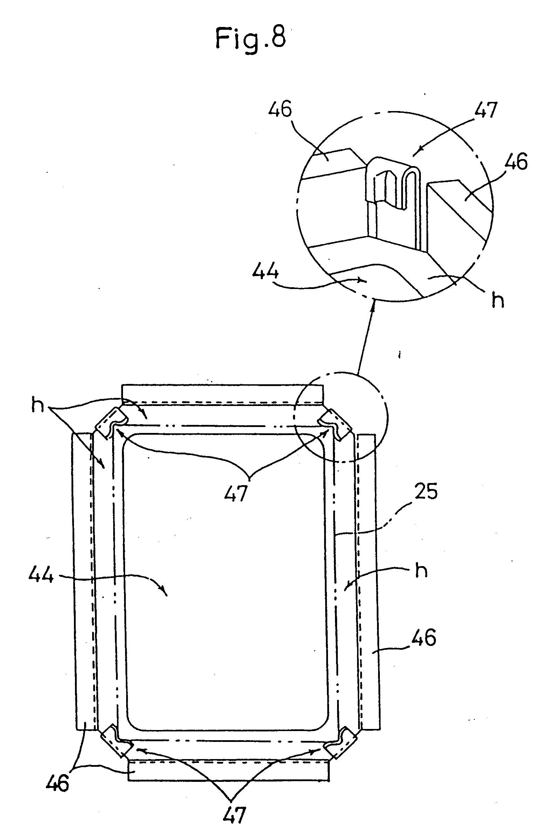

In addition, although the case 25 is energized by said elastic holding means 47 at a middle portion of a side surface thereof in the above described preferred embodiment, corner portions of the tip-housing case 25 may be elastically energized toward a put-in-two center thereof by the elastic holding means 47, as shown in Fig. 8, or, corner portions of the case may be elastically energized toward said center of the case (that is in a diagonal direction) and surface portions in the vicinity of said corner portions of the case may be pressed although they are not shown. According to these constructions, since the case 25 has a higher rigidity in the vicinity of the corner portions thereof, the case 25 is difficultly deformed although the elastic holding means 47 is enhanced in energizing force to some extent and thus a high strength of the tip-housing case 25 can be kept.

Next, as to the covers 13 of the reagent-containing vial 12, the covers 13 comprise a cover body 48 held engagedly with a flange portion (i) of the reagent-containing vial 12, a neck portion 49 provided with a tapped portion formed on an upper side thereof and connected with a center of an upper surface of said cover body 48, a stepped head portion 50 having a diameter smaller than that of the cover body 48 and screwed on said tapped portion and a conical surface portion (S) formed in a lower portion of said head portion 50 in the form of an expanded-in-skirt concave portion with an axis shaft line of said neck portion 49 as a center, as shown in Fig. 9.

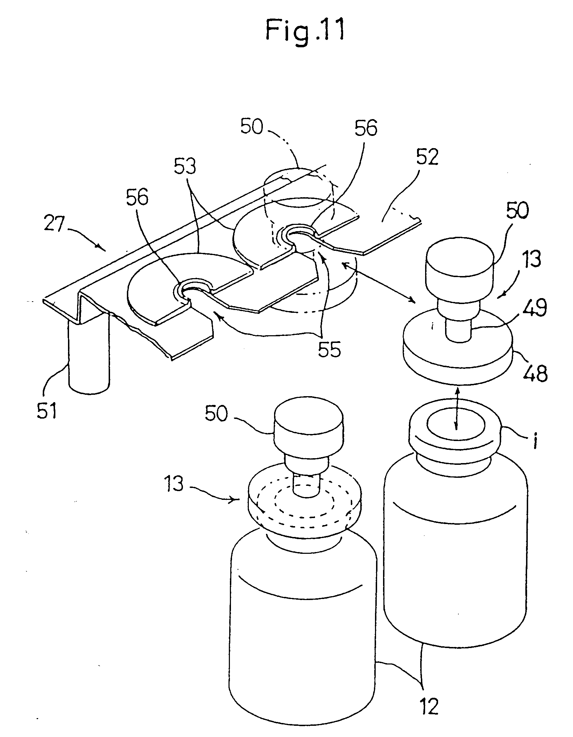

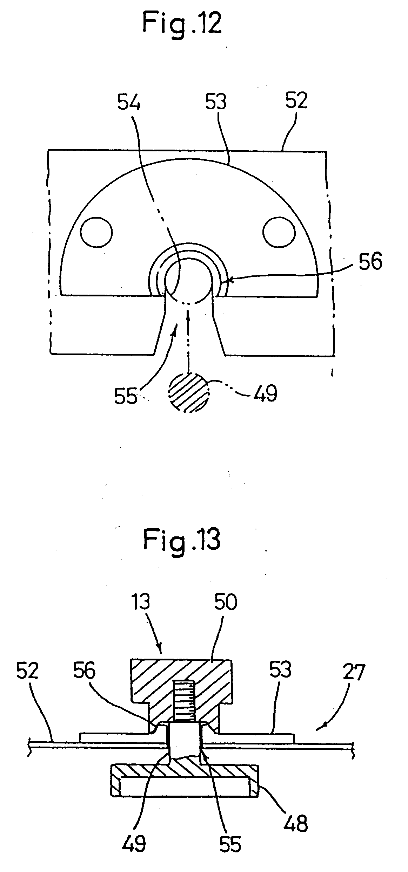

Said table 27 for placing the covers 13 of the containers thereon has a construction as shown in Figs. 10 to 13. That is to say, the table 27 comprises a bent plate-like member 52 connected with a pin 51 standing on the base 1 of the apparatus in a cantilever manner and facing to the side of a container-arranging portion 26, cover-placing members 53 slightly larger than a semicircle, made of synthetic resins and provided on an upper surface of said plate-like member 52 at appointed intervals in the longitudinal direction, a neck-inserting portion 54 having a diameter slightly larger than that of the neck portion 49 of the covers 13 of the containers formed around semicircular centers of said cover-placing members 53 relatively to the cover-placing members 53 and the plate-like member 52, a neck-introducing portion 55 for introducing the neck portion 49 into said neck-inserting portion 54 from the horizontal direction and a partially conical surface-shaped cover-supporting portion 56 formed around a center of the neck-inserting portion 54 for supporting said conical surface portion (S) of the head portion 50.

According to the above described construction, the conical surface portion (S) of the head portion 50 is supported by said cover-supporting portion 56 of the table 27 for placing the covers 13 of the vials thereon under the surface-engaged condition by manipulating the head portion 50 of the covers 13 of the vials with a mouth portion of the reagent-contained vial 12 closed by means of the work hand 9 to lift it up and simultaneously move it horizontally, whereby introducing the neck portion 49 into the neck-inserting portion 54 through said neck-introducing portion 55, and slightly descending the work hand 9 to cancel the head portion 50 from being caught in case of need.

In the case where the head portion 50 is to be cancelled from being caught by means of the work hand 9, even though the central position of the conical surface portion (S) of the head portion 50 is slightly shifted from the center of the cover-supporting portion 56 of the table 27 for placing the covers 13 of the vials thereon, both the conical surface portion (S) and the cover-supporting portion 56 have a conical shape, so that they can be automatically centered and also a movement of the covers 13 of the vials due to vibration can be surely prevented and thus an automatical manipulating of the covers 13 by means of the work hand 9 can be easily achieved.

Said chucking device 30 has a construction as shown in Figs. 14 to 16. That is to say, the chucking device 30 comprises a disk-like body of revolution 57 provided with a circumferential wall (j) and connected with an output shaft 59 of a stepping motor (one example of a driving gear) 58 and a ring-like trailing body of revolution 61 concentrically held on an upper portion of said circumferential wall (j) of said body of revolution 57 through a bearing 60, both the body of revolution 57 and said body of revolution 61 being relatively rotatably connected with each other through a spring 62.

And, the body of revolution 57 is provided with for example 3 pieces of support shaft 63 standing at regular intervals around an axis of rotation (P) thereof, chucking member 65 provided with a rubber roller 64 on the side of an idling end thereof being pivoted on said support shafts 63 so as to be symmetric relative to a point, the circumferential wall (j) and the trailing body of revolution 61 being provided with a concave portion (m), (n), respectively, formed in correspondence to a pivoting base portion of said chucking member 65, a member to be engaged 66, which is engaged with said concave portion (n) with relative rotations of both bodies of revolution 57, 61 against an energizing force of said spring 62, being connected with the respective pivoting base portion sides of the chucking member 65, and locking means 67 for releasably locking the trailing body of revolution 61 at an appointed position being provided.

In addition, said locking means 67 comprises a member 68 provided with a stopper hole (r) and formed in the circumferential portion of the trailing body of revolution 61, a stopper member 70, which is engaged with said stopper hole (r) of said member 68 when the trailing body of revolution 61 was stopped at said appointed position by control means 69 for an appointed position-stoppage, and a solenoid 71 for engaging and disengaging said stopper member 70 with the stopper hole (r).

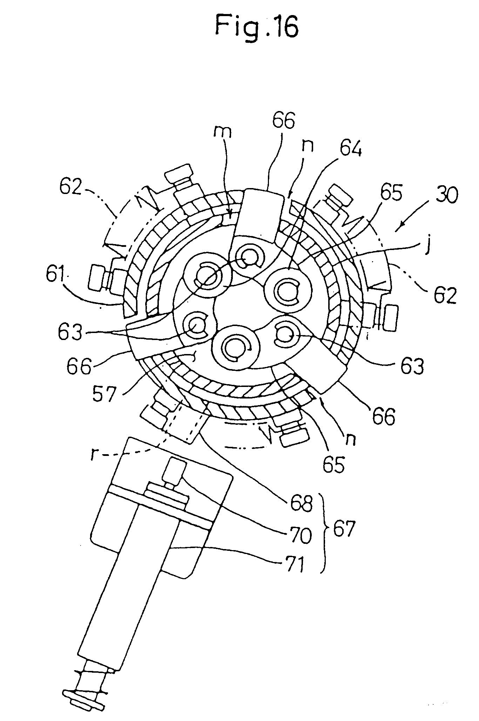

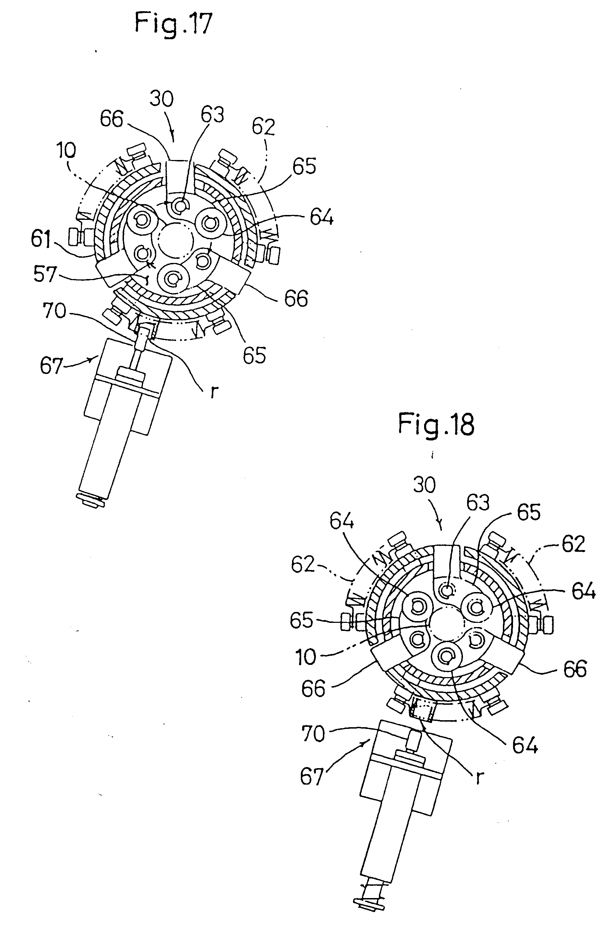

According to such a construction, when said solenoid 71 is operated under the condition that the trailing body of revolution 61 is stopped at the appointed position and thus the chucking member 65 is contractedly closed on the idling end side thereof, to engage the stopper member 70 with the stopper hole (r), that is to lock the trailing body of revolution 61 at the appointed position, as shown in Fig. 16, and the body of revolution 57 is slightly rotated positively (in a clockwise direction in Fig. 16) against said energizing force of the spring 62, the idling end side of the chucking member 65 is expandedly opened, as shown in Fig. 17, by slightly rotating the support shaft 63 under the condition that said member to be engaged 66 is engaged with an end portion of the concave portion (n) on the side of the trailing body of revolution 61 on the idling end side thereof.

Here, upon inserting the sample vial 10, of which screw cap 11 (having a right-handed screw construction for convenience) was manipulated by means of the work hand 9, in a space limited by the chucking member 65 and reversely rotating the body of revolution 57 to an original position, the idling end side of the chucking member 65 is contractedly closed by the energizing force of the spring 62 and thus the sample vial 10 is caught by the rubber roller 64 on the idling end side of the chucking member 65 (refer to Fig. 18).

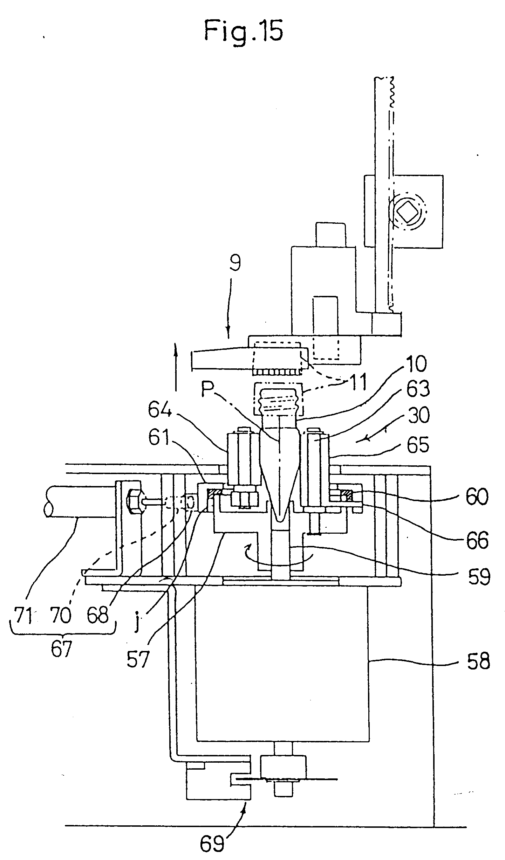

And, the screw cap 11 can be automatically removed from the sample vial 10 by reversely operating the solenoid 71 under the above described condition to release the stopper member 70 from the stopper hole (r), that is to cancel the locking of the trailing body of revolution 61, and lifting the work hand 9 by every dimension corresponding to one pitch of the screw cap 11 per one rotation of the body of revolution 57 while regularly rotating the body of revolution 57, as shown in Fig. 15.

In addition, the screw cap 11 is screwed on the sample vial 10 and the sample vial 10 is taken out of the chucking device 30 by an operation opposite to the one described above.

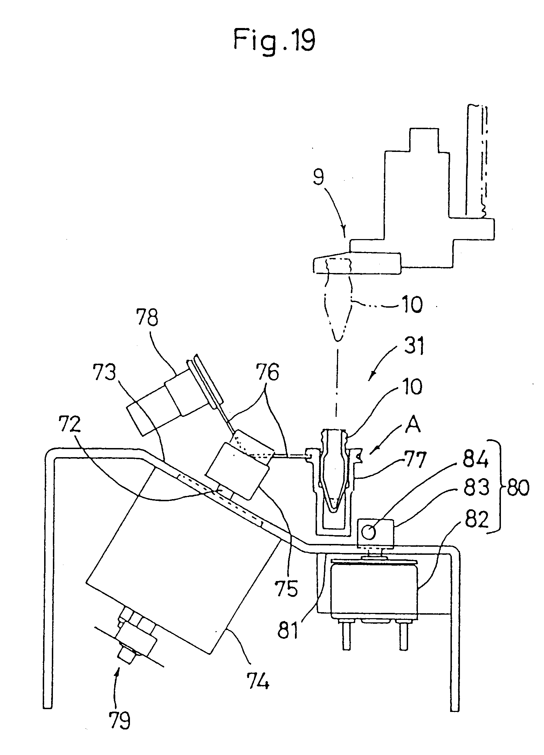

Said centrifugal stirrer 31 has a construction as shown in Figs. 19 to 21. That is to say, a stepping motor (one example of driving gears) 74 is provided on a lower surface side of an inclined plate 73 under the condition that an output shaft 72 is projected above said inclined plate 73, a body of revolution 75 being mounted on an axial end of said output shaft 72, and said body of revolution 75 being provided with a pair of elastically flexible arms 76 made from for example spring wire materials so as to give appointed angles and a phase difference of 180°.

And, one of a pair of arms 76 is provided with a cylindrical vial-receiving member 77, in which the sample vial 10 is to be inserted under the condition that a horizontal posture is given to said arm 76 and the axis shaft line of the sample vial 10 caught by the work hand 9 is set to be perpendicular, and the other of said arms 76 is provided with a balance-setting dummy body 78 having a weight almost equal to the total weight of said vial-receiving member 77 and the sample vial 10 inserted in the vial-receiving member 77.

In addition, referring to Figs. 19 to 21, reference numeral 79 designates position-regulating means for stopping said stepping motor 74 at an appointed position to position the vial-receiving member 77 at a position (A) in which the sample vial 10 is to be inserted in a vertical posture.

Furthermore, beating means 80 for stirring the sample and reagent within the sample vial 10 inserted in the vial-receiving member 77 is provided in the vicinity of the vial-receiving member 77 when the vial-receiving member 77 exists at said vial-inserting position (A).

Said beating means 80 comprises a rotary solenoid 82 provided on a horizontal plate 81 connected with the inclined plate 73, a hammer boss 83 fixedly mounted on an upper end of an axis of rotation of said solenoid 82 and a hammer arm 84 projectedly provided in the lateral direction relatively to said boss 83.

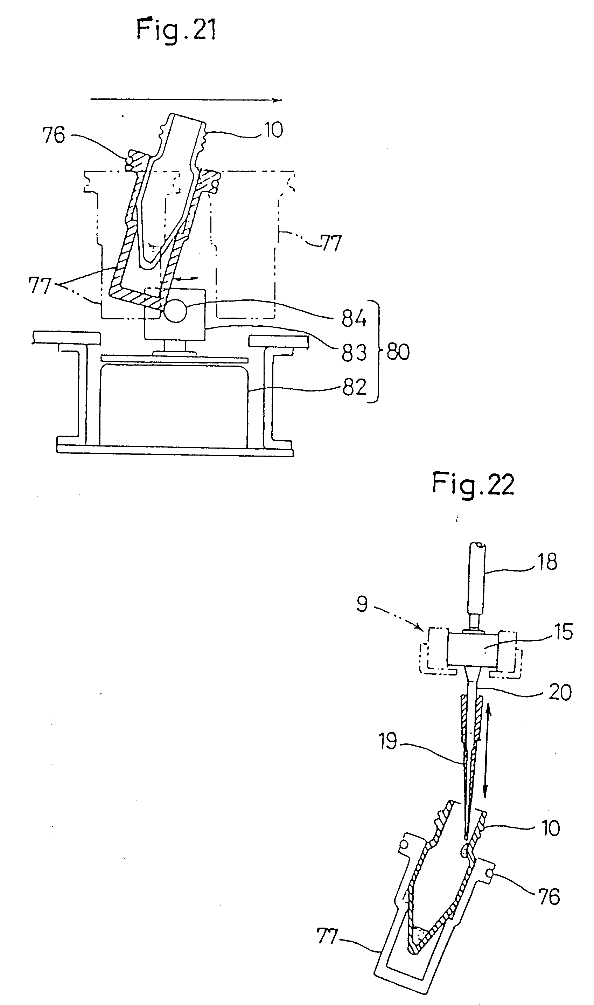

In the centrifugal stirrer 31 having the above described construction, a very small quantity of reagent sucked in the tip 19 can be almost completely pipetted into the sample vial 10 by slightly rotating the stepping motor 74 to slightly move the vial-receiving member 77 existing at the vial-inserting position (A), that is slightly inclining the sample vial 10 inserted in the vial-receiving member 77 to engage a pointed end of the tip 19 with an inner wall of the sample vial 10, as shown in Fig. 22.

That is to say, although the reagent sucked in the tip 19 can be almost completely pipetted into the sample vial 10 even by merely operating said pipetting pump 16 of the reagent-pipetting unit 14, if said pointed end of the tip 19 is additionally brought into contact with an inclined inner wall of the sample vial 10, the reagent remaining in the pointed end of the tip 19 is suckedly transferred onto said inner wall of the vial 10 and thus even though a very small quantity of reagent is sucked in the tip 19, it can be almost completely pipetted into the sample vial 10.

Besides, it goes without saying that the reagent can be pipetted in the same manner as shown in Fig. 22 also by inserting the tip 19 in the sample vial 10 inserted in the vial-receiving member 77 under the condition that the vial-receiving member 77 is positioned at the vial-inserting position (A) and then slightly rotating the stepping motor 74 to bring the pointed end of the tip 19 into contact with the inner wall of the vial 10.

The reagent pipetted in the above described manner is mixed with the sample to carry out the reaction but a remarkably very small quantity of reagent is stuck to the inner wall of the vial 10 by the above described pipetting of the reagent, so that it becomes difficult to achieve a desired mixing.

So, after the above described pipetting, the stepping motor 74 is rotated at high speed to give a centrifugal force to the reagent (weight), whereby forcibly focusing the reagent and the sample on a bottom portion of the vial.

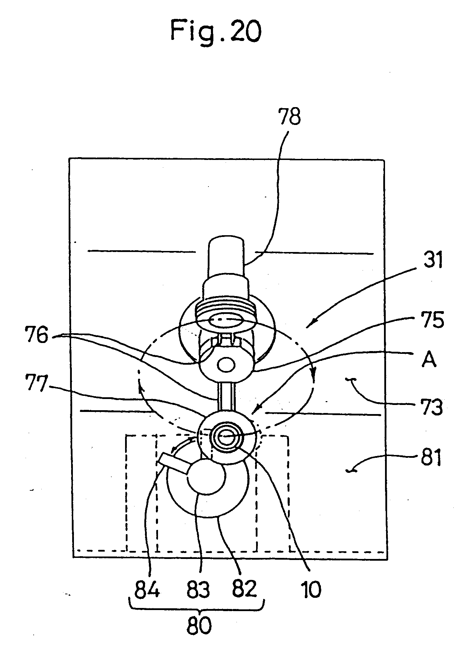

And, after the lapse of an appointed time, the stepping motor 74 is rotated at low speed and the rotary solenoid 82 is operated to switch over said hammer arm 84 from a watch-and-wait position shown by a full line in Fig. 20 to a beating position shown by a two-dot chain line in Fig. 20, whereby the lower portion side of the vial-receiving member 77 inserted in the sample vial 10 is beaten by means of the hammer arm 84 and as a result the sample and reagent within the sample vial 10 can be effectively vibrated and stirred.

After the completion of this stirring, the stepping motor 74 is rotated at high speed again to focus the reagent-mixed sample scattered by said vibration and stirring and stuck to the inner wall of the vial on said bottom portion of the vial.

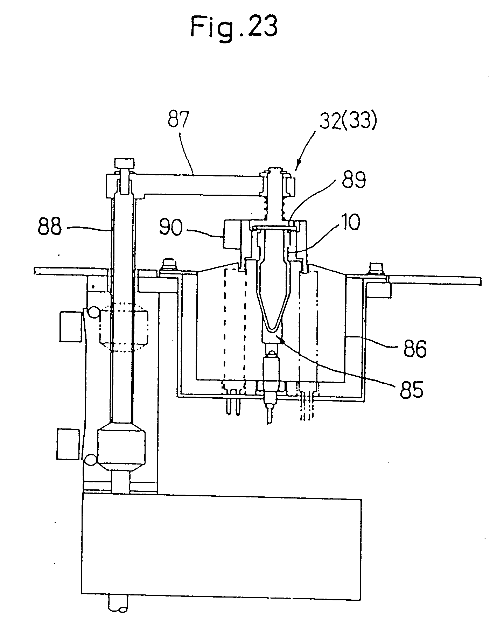

Next, as to said reaction-promoting heaters 32 and 33, both the heater 32 and the heater 33 have the same construction shown in Fig. 23.

That is to say, the heaters 32 and 33 comprise a holding member 88 with a horizontal arm 87 connected with an upper end thereof elevatably provided in the vicinity of a heat block 86 with a holding portion 85 holding the sample vial 10, a cover body 89 elastically dislocatable in the up and down direction on an idling end side of said arm 87 for closing a mouth portion of the sample vial 10 and a heater 90 provided in said cover body 89.

According to the above described construction, since the reagent-mixed sample within the sample vial 10 is heated by means of said heat block 86, not only the reaction of the sample and the reagent is promoted but also the reagent-mixed sample, in particular the reagent, can be prevented from being evaporated by means of the cover body 89. In addition, since the cover body 89 is heated by means of said heater 90, in particular the reagent can be effectively prevented from being cohered on an inner surface of the cover body.

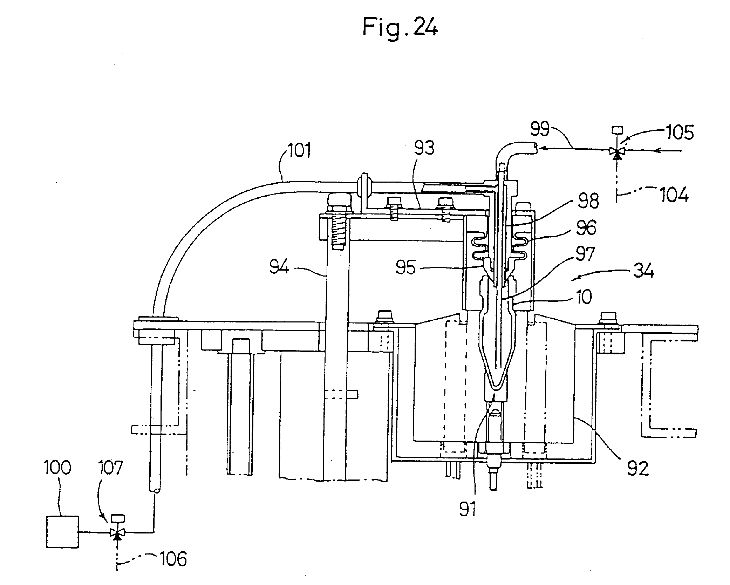

The evaporator 34 has a construction as shown in Fig. 24. That is to say, the evaporator 34 comprises a holding member 94 with a horizontal arm 93 connected with an upper end thereof elevatably provided in the vicinity of a heat block 92 with a holding portion 91 holding the sample vial 10, a cover member 95 elastically dislocatable in the up and down direction through a bellows member 96 on an idling end side of said arm 93 for closing said mouth portion of the sample vial 10 held by means of said holding portion 91 and double tubes 97 and 98 passing through a central portion of said cover member 95.

And, an inner tube 97 of said double tubes 97 and 98 is set in length so that a lower end thereof may be positioned in the vicinity of a liquid level of the reagent-mixed sample within the sample vial 10, an air supply line 99 supplying a space closed by the cover member 95 of the sample vial 10 with a purge gas being connected with an upper end of the inner tube 97, an exhaust line 101 connected with vacuum exhaust means 100 being connected with an upper end of an outer tube 98, and said purge gas, such as nitrogen, being introduced into the sample vial 10 and simultaneously exhausted in a vacuum while heating the reagent-mixed sample within the sample vial 10 by means of said heat block 92 to distil off the reagent and the like within the sample vial 10 and concentrate the sample and the like.

In the evaporator 34 having the above described construction, disadvantages occur in that not only the reagent is evaporated in the sample vial 10 by heating the reagent-mixed sample by means of the heat block 92 but also the reagent-mixed sample is scattered in the sample vial 10 by the spouting of the purge gas and mists of the reagent and reagent-mixed sample are stuck to an outer surface of the inner tube 97 and an inner surface of said exhaust line 101, whereby the contamination between the sample vial 10 is brought about and the exhaust line 101 is stopped.

In order to avoid such disadvantages, said washing device 35 is provided in the vicinity of the evaporator 34.

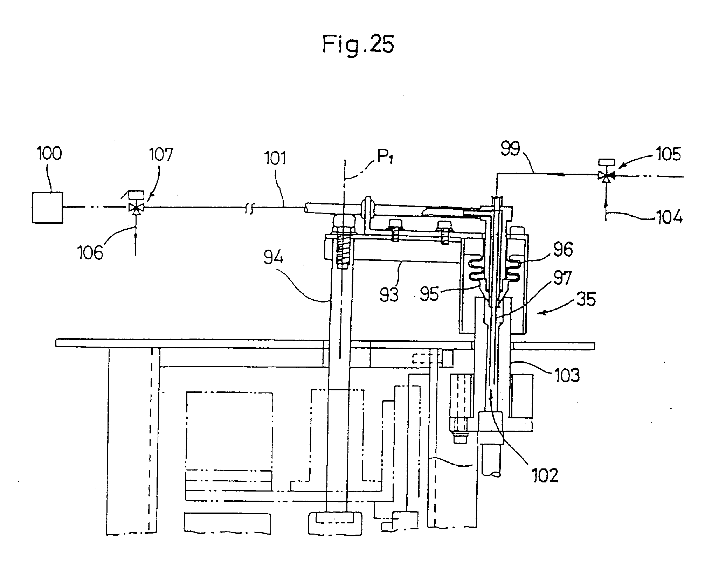

In order to construct the washing device 35, said arm-holding member 94 is arranged rotatably around a longitudinal axis shaft line (P₁), as shown in Fig. 3, a washing block 103 provided with a washing room 102 with an upper portion opened being arranged at a position where said upper opening is closed by means of the cover member 95 under the condition that the inner tube 97 is inserted through said washing room 102, a three-way valve 105 provided with a washing liquid supply line 104 connected therewith being provided midway said purge gas supply line 99 in order to switchedly supply the washing room 102 with a washing liquid in place of the purge gas, and a three-way valve 107 provided with a waste liquid line 106 of said washing liquid connected therewith being provided midway the exhaust line 101, as shown in Fig. 25.

That is to say, the washing room 102, which can be closed by means of the cover member 95, is provided and the gas supply line 99 and the exhaust line 101 of the evaporator 34 are effectively used to switchedly supply them with the washing liquid, whereby the reagent-mixed sample stuck to the outer surface of the inner tube 97 and the inner surface of the exhaust line 101 can be forcibly washed away and thus the contamination between the vials and the stoppage of the exhaust line 101 can be prevented.

The pretreatment for the reaction of reagents by means of the pretreatment apparatus having the above described construction is fully-automatically conducted in for example the following process:
1. The sample vial 10 is supplied to the chucking device 30 from the container-holding portion 28 by means of the work hand 9.
2. The screw cap 11 is removed by rotating the chucking device 30 under the condition that the screw cap 11 is held by means of the work hand 9.
3. The removed cap 11 is transferred onto the table 29 for temporarily placing the screw cap 11.
4. The sample vial 10, from which the cap has been removed, is moved to the centrifugal stirrer 31.
5. The vial cover 13 is removed from the vial 12, in which the first reagent for for example the pyridylamination is housed, by means of the work hand 9 and the removed vial cover 13 is transferred onto the table 27.
6. The tip holder 15 is taken out from the holder-storing portion 36 by means of the work hand 9 and the tip 19 is engagedly held in the tip-holding pipe 20.
7. The appointed quantity of the first reagent (10 »l of a solution of 2-aminopyridine in acetic acid) is sucked from the vial 12 by means of the tip 19 and the first reagent is pipetted into the sample vial 10 held in the centrifugal stirrer 31.
8. The tip 19, which has been used, is abandoned into the case 23 by means of the tip-separating means 22.
9. The tip holder 15 is leanedly stored in the holder-storing portion 36.
10. The vial cover 13 for the vial 12, in which the first reagent is housed, is closed.
11. The first reagent within the sample vial 10 is weighted by means of the centrifugal stirrer 31 (the reagent stuck to the wall surface of the sample vial is collected on the bottom portion of the vial by the centrifugal force. For example about 20 seconds).
12. The sample and the first reagent are stirred by means of the hammer arm 84 under the condition that the sample vial 10 is rotated at low speed after the above described weighting and the reagent-mixed sample, which has been stirred, is weighted (about 40 seconds).
13. The sample vial 10 is moved to the heater 32 by means of the work hand 9.
14. The thermal reaction for the pyridylamination between the sample and the first reagent is conducted for 20 minutes at a temperature of for example about 90°C in the heater 32.
15. After the reaction, the sample vial 10 is transferred to the evaporator 34.
16. In the evaporator 34, the first reagent is distilled off (the evaporation is continued for 20 minutes at a temperature of 60 °C while supplying the sample vial 10 with an inert gas, such as a N₂ gas, and suctioning gases within the vial 10 in a vacuum).
17. The sample vial 10 is transferred to the centrifugal stirrer 31.
   In the following 18 to 27, the reductive process by the same cycle as in the above 5 to 14 is conducted.
18. The cover 13 of the vial 12, in which the second reagent for the reduction is housed, is removed and the removed cover 13 is transferred onto the table 27.
19. The tip holder 15 is taken out and the tip 19 is engagedly held by means of the work hand 9.
20. The appointed quantity of the second reagent (10 »l of a solution of boran dimethyl amine in acetic acid) is sucked and the second reagent is pipetted into the sample vial 10.
21. The tip 19, which has been used, is abandoned into the case 23.
22. The tip holder 15 is stored in the holder-storing portion 36.
23. The vial cover 13 for the vial 12, in which the second reagent is housed, is closed.
24. The second reagent is weighted (about 20 seconds).
25. The sample and the second reagent are stirred by means of the hammer arm 84 and the reagent-mixed sample, which has been stirred, is weighted (about 40 seconds).
26. The sample vial 10 is moved to the heater 33.
27. The thermal reaction for the reduction is conducted for 20 minutes at a temperature of for example about 90 °C in the heater 33.
28. Subsequently, the sample vial 10 is transferred into the centrifugal stirrer 31.
   In the following 29 to 36 and 37 to 44, the first azeotropic process and the second azeotropic process by the same cycle as in the above 18 to 25 are conducted. That is to say,
29. The cover 13 of the vial 12, in which the third reagent for the first azeotropic process is housed, is removed and the removed cover 13 is transferred onto the table 27.
30. The tip holder 15 is taken out and the tip 19 is engagedly held by means of the work hand 9.
31. The appointed quantity of the third reagent (20 »l of methanol) is sucked and the third reagent is pipetted into the sample vial 10.
32. The tip 19, which has been used, is abandoned into the case 23.
33. The tip holder 15 is stored in the holder-storing portion 36.
34. The vial cover 13 for the vial 12, in which the third reagent is housed, is closed.
35. The third reagent is weighted (about 20 seconds).
36. The sample and the third reagent are stirred by means of the hammer arm 84 and the reagent-mixed sample, which has been stirred, is weighted (about 40 seconds).
37. The cover 13 of the vial 12, in which the fourth reagent for the second azeotropic process is housed, is removed and the removed cover 13 is transferred onto the table 27.
38. The tip holder 15 is taken out and the tip 19 is engagedly held by means of the work hand 9.
39. The appointed quantity of the fourth reagent (40 »l of toluene) is sucked and the fourth reagent is pipetted into the sample vial 10.
40. The tip 19, which has been used, is abandoned into the case 23.
41. The tip holder 15 is stored in the holder-storing portion 36.
42. The vial cover 13 for the vial 12, in which the fourth reagent is housed, is closed.
43. The fourth reagent is weighted (about 20 seconds).
44. The sample and the fourth reagent are stirred by means of the hammer arm 84 and the reagent-mixed sample, which has been stirred, is weighted (about 40 seconds).
   Then, the same cycle as in the above described 15 to 17 is taken. That is to say,
45. After the reaction, the sample vial 10 is transferred to the evaporator 34.
46. In the evaporator 34, the third and fourth reagents are distilled off (the evaporation is continued for 10 minutes at a temperature of 60°C while supplying the sample vial 10 with an inert gas, such as a N₂ gas, and suctioning gases within the vial 10 in a vacuum).
47. The sample vial 10 is transferred to the centrifugal stirrer 31.
   In the following 48 to 55 and 56 to 63, the third azeotropic process and the fourth azeotropic process by the same cycle as in the above 37 to 44 are conducted. That is to say,
48. The cover 13 of the vial 12, in which the fifth reagent for the third azeotropic process is housed, is removed and the removed cover 13 is transferred onto the table 27.
49. The tip holder 15 is taken out and the tip 19 is engagedly held by means of the work hand 9.
50. The appointed quantity of the fifth reagent (20 »l of methanol) is sucked and the fifth reagent is pipetted into the sample vial 10.
51. The tip 19, which has been used, is abandoned into the case 23.
52. The tip holder 15 is stored in the holder-storing portion 36.
53. The vial cover 13 for the vial 12, in which the fifth reagent is housed, is closed.
54. The fifth reagent is weighted (about 20 seconds).
55. The sample and the fifth reagent are stirred by means of the hammer arm 84 and the reagent-mixed sample, which has been stirred, is weighted (about 40 seconds).
56. The cover 13 of the vial 12, in which the sixth reagent for the fourth azeotropic process is housed, is removed and the removed cover 13 is transferred onto the table 27.
57. The tip holder 15 is taken out and the tip 19 is engagedly held by means of the work hand 9.
58. The appointed quantity of the sixth reagent (40 »l of toluene) is sucked and the sixth reagent is pipetted into the sample vial 10.
59. The tip 19, which has been used, is abandoned into the case 23.
60. The tip holder 15 is stored in the holder-storing portion 36.
61. The vial cover 13 for the vial 12, in which the sixth reagent is housed, is closed.
62. The sixth reagent is weighted (about 20 seconds).
63. The sample and the sixth reagent are stirred by means of the hammer arm 84 and the reagent-mixed sample, which has been stirred, is weighted (about 40 seconds).
   Then, the same cycle as in the above described 45 to 47 is taken. That is to say,
64. After the reaction, the sample vial 10 is transferred to the evaporator 34.
65. In the evaporator 34, the fifth and sixth reagents are distilled off (the evaporation is continued for 10 minutes at a temperature of 60°C with supplying the sample vial 10 with an inert gas, such as a N₂ gas, and suctioning gases within the vial 10 in a vacuum).
66. The sample vial 10 is transferred into the centrifugal stirrer 31.
   In the following 67 to 74, the fifth azeotropic process by the same cycle as in the above 56 to 63 is conducted. That is to say,
67. The cover 13 of the vial 12, in which the seventh reagent for the fifth azeotropic process is housed, is removed and the removed cover 13 is transferred onto the table 27.
68. The tip holder 15 is taken out and the tip 19 is engagedly held by means of the work hand 9.
69. The appointed quantity of the seventh reagent (40 »l of toluene) is sucked and the seventh reagent is pipetted into the sample vial 10.
70. The tip 19, which has been used, is abandoned into the case 23.
71. The tip holder 15 is stored in the holder-storing portion 36.
72. The vial cover 13 for the vial 12, in which the seventh reagent is housed, is closed.
73. The seventh reagent is weighted (about 20 seconds).
74. The sample and the seventh reagent are stirred by means of the hammer arm 84 and the reagent-mixed sample, which has been stirred, is weighted (about 40 seconds).
   Then, the same cycle as in the above described 64 and 65 is taken. That is to say,
75. After the reaction, the sample vial 10 is transferred to the evaporator 34.
76. In the evaporator 34, the seventh reagent is distilled off (the evaporation is continued for 10 minutes at a temperature of 60 °C while supplying the sample vial 10 with an inert gas, such as a N₂ gas, and suctioning gases within the vial 10 in a vacuum).
   Thus, the pyridylamination, the reduction and the first to fifth azeotropic processes are over and then
77. The sample vial 10 is transferred to the chucking device 30.
78. The purge gas system of the evaporator 34 is washed simultaneously with the above described transfer of the sample vial 10.
   That is to say, at the point of time when the final evaporation for one sample is over, the arm-holding member is rotated, the washing room 102 of the washing block 103 being closed with the cover member 95, and the three-way valves 105, 107 being switched over to the washing liquid-supplying form to wash the mists and the like of the reagents by the use of the purge gas supply line 99 and the purge gas exhaust line 101.
79. The cap 11 is held on the table 29 for temporarily placing the cap 11 and transferred to the chucking device 30 by means of the work hand 9.
80. The chucking device 30 is rotated under the condition that the cap 11 is held to close the sample vial 10 with the screw cap 11.
81. The cap-provided vial 10 is transferred to the sample vial-holding portion 28.

Thus, the pretreatment for for example the analysis of sugars is finished.

As above described, with the pretreatment apparatus according to the present invention, various kinds of operation in the pretreatment, such as the mounting and removal of the cap on and from the mouth portion of the sample vial, the replacement of the tip for the tip holder, the pipetting of various kinds of reagent in the sample vial and the transfer of the sample vial to various kinds of device, can be fully-automatically conducted and thus the time required for the pretreatment for the analysis can be reduced and the reproducibility of the pretreatment can be improved.

In addition, if the tip holder of the reagent-pipetting unit is held in the storing portion in the steps other than the reagent-pipetting step, the tube of the reagent-pipetting unit does not hinder the movement of the sample vial and the like and also the freedom in the arrangement and design of various kinds of device and the storing portion can be improved which are ideal for the pretreatment apparatus for use in the analysis.

## Claims

1. A fully automatic pretreatment apparatus for use in connection with the analysis of substances comprising a storing portion (24) of reagent-pipetting tips (19), a storing portion (26) of reagent-containing vials (12), a storing portion (28) of sample vials (10), a unit (14) for pipetting of a reagent into the sample vial (10) from which a cap (11) has been removed, a centrifugal stirrer (31) for weighting said pipetted reagent and stirring the reagent and a sample, a heater (32, 33) for the stirred reagent and said sample, an evaporator (34) for the reagent and sample and a tip-separating means (22) for separating a tip (19) held by said tip holder (15) when said tip holder (15) is lifted up by a three-dimensionally movable work hand (9), **characterized by** a chuck device (30) of said sample vial (10) adapted to chuck and rotate the sample vial (10), and by said three-dimensionally movable work hand (9) having two concave portions (a, b) of different size formed in said work hand (9), so that at least a holding of caps (11) of said vials (10, 12) and a holding of said vials (10, 12) from which said caps (11) have been removed is possible, said work hand (9) being adapted to separately manipulate a tip holder (15) of said unit (14) for pipetting a reagent into said sample vial (10), a cover (13) of a reagent-containing vial (12), a screw cap (11) of said sample vial (10) and the sample vial (10) from which said cap (11) has been removed, respectively.

2. A fully automatic pretreatment apparatus according to claim 1,
**characterized in that** said unit (14) for pipetting a reagent into the sample vial (10) comprises the tip holder (15) manipulated by said work hand (9) and held in said storing portion (28) in other processes than the said pipetting of reagent, a pipetting pump (16) and a flexible tube (18) communicatingly connecting said pipetting pump (16) to the tip holder (15).

3. A fully automatic pretreatment apparatus according to claims 1 or 2,
**characterized in that** said centrifugal stirrer (31) comprises a vial-receiving member (77) for receiving said sample vial (10) and for moving said vial-receiving member (77) at an appointed position, thereby inclining said vial-receiving member (77) such that an inner wall of the sample vial (10) inserted into that vial-receiving member (77) can be brought into contact with the appointed end of said pipetting tip (19) during pipetting.

## Patentansprüche

1. Vollautomatische Aufbereitungsvorrichtung zur Verwendung in Verbindung mit der Analyse von Substanzen, mit einem Aufbewahrungsbereich (24) für Reagenspipettierspitzen (19), einem Aufbewahrungsbereich (26) für reagensenthaltende Ampullen (12), einem Aufbewahrungsbereich (28) für Probenampullen (10), einer Einheit (14) zum Pipettieren eines Reagens in eine Probenampulle (10), von der eine Kappe (11) entfernt wurde, einem Zentrifugalrührer (31) zum Erhöhen des Gewichts des pipettierten Reagens und zum Rühren des Reagens und einer Probe, einer Heizeinrichtung (32, 33) für das Reagens und die Probe, die gerührt wurden, einem Verdampfer (34) für das Reagens und die Probe, und einer Spitzentrenneinrichtung (22) zum Abtrennen einer vom Spitzenhalter (15) gehaltenen Spitze (19), wenn der Spitzenhalter (15) durch eine dreidimensional bewegliche Arbeitshand (9) angehoben wird, **gekennzeichnet durch** eine Spannvorrichtung (30) für die Probenampulle (10), die so ausgebildet ist, daß sie die Probenampulle (10) festspannt und dreht, wobei die dreidimensional bewegliche Arbeitshand (9) zwei konkave Bereiche (a, b) mit verschiedener Größe aufweist, die in dieser Arbeitshand (9) so ausgebildet sind, daß zumindest ein Festhalten von Kappen (11) der Ampullen (10, 12) und ein Festhalten der Ampullen (10, 12), von denen die Kappen (11) entfernt wurden, möglich ist, und wobei die Arbeitshand (9) so ausgebildet ist, daß sie einen Spitzenhalter (15) der Einheit (14) zum Pipettieren eines Reagens in die Probenampulle (10), einen Verschluß (13) für eine reagensenthaltende Ampulle (12), eine Schraubkappe (11) der Probenampulle (10) und die Probenampulle (10), von der die Kappe (11) entfernt wurde, getrennt handhabt.

2. Vollautomatische Aufbereitungsvorrichtung nach Anspruch 1, **dadurch gekennzeichnet, daß** die Einheit (14) zum Pipettieren eines Reagens in die Probenampulle (10) folgendes umfaßt: den Spitzenhalter (15), der von der Arbeitshand (9) manipuliert wird und bei anderen Prozessen als dem des Pipettierens eines Reagens im Aufbewahrungsbereich (28) gehalten wird, eine Pipettierpumpe (16) und eine flexible Leitung (18), die die Pipettierpumpe (16) leitend mit dem Spitzenhalter (15) verbindet.

3. Vollautomatische Aufbereitungsvorrichtung nach einem der Ansprüche 1 oder 2, **dadurch gekennzeichnet, daß** der Zentrifugalrührer (31) ein eine Ampulle aufnehmendes Teil (77) zum Aufnehmen der Probenampulle (10) aufweist, das in eine vorgegebene Position transportiert werden kann, wobei das eine Ampulle aufnehmende Teil (77) so schräggestellt wird, daß die Innenwand der in dieses eine Ampulle aufnehmende Teil (77) eingesetzten Probenampulle (10) während des Pipettierens mit dem Spitzenende der Pipettierende (19) in Kontakt gebracht werden kann.

## Revendications

1. Appareil de prétraitement totalement automatique destiné à être utilisé en relation avec l'analyse de substances, comportant une partie de stockage (24) d'embouts de pipetage de réactifs (19), une partie de stockage (26) d'ampoules contenant des réactifs (12), une partie de stockage (28) d'ampoules à échantillons (10), une unité (14) pour le pipetage d'un réactif dans l'ampoule à échantillon (10) d'où a été retiré un capuchon (11), un agitateur centrifuge (31) pour peser ledit réactif pipeté et pour agiter le réactif et un échantillon, un élément chauffant (32, 33) pour le réactif agité et ledit échantillon, un évaporateur (34) pour le réactif et l'échantillon, et des moyens de séparation d'embout (22) pour séparer un embout (19) supporté par ledit support d'embout (15) lorsque ledit support d'embout (15) est soulevé par une pince de travail mobile dans les trois dimensions (9), caractérisé par un dispositif de mandrin (30) de ladite ampoule à échantillon (10), adapté pour supporter et pour faire tourner l'ampoule à échantillon (10), et par le fait que ladite pince de travail mobile dans les trois dimensions (9) comporte deux parties concaves (a, b) de tailles différentes formées dans ladite pince de travail (9), de telle sorte qu'au moins un maintien des capuchons (11) desdites ampoules (10, 12) et un maintien desdites ampoules (10, 12) dont ont été retirés lesdits capuchons (11) soient possibles, ladite pince de travail (9) étant adaptée pour manipuler séparément un support d'embout (15) de ladite unité (14) pour pipeter un réactif dans ladite ampoule à échantillon (10), un couvercle (13) d'une ampoule (12) contenant un réactif, un capuchon à vis (11) de ladite ampoule à échantillon (10) et l'ampoule à échantillon dont a été retiré ledit capuchon (11), respectivement.

2. Appareil de prétraitement totalement automatique selon la revendication 1, caractérisé en ce que ladite unité (14) pour le pipetage d'un réactif dans l'ampoule à échantillon (10) comporte le support d'embout (15) manipulé par ladite pince de travail (9) et maintenu dans ladite partie de stockage (28) dans d'autres processus que ledit pipetage d'un réactif, une pompe de pipetage (16) et un tube flexible (18) connectant de façon à pouvoir les faire communiquer ladite pompe de pipetage (16) au support d'embout (15).

3. Appareil de prétraitement totalement automatique selon la revendication 1 ou 2, caractérisé en ce que ledit agitateur centrifuge (31) comporte un élément de réception d'ampoule (77) pour recevoir ladite ampoule à échantillon (10) et pour déplacer ledit élément de réception d'ampoule (77) en une position prescrite, de façon à incliner par conséquent ledit élément de réception d'ampoule (77) de telle sorte qu'une paroi intérieure de l'ampoule à échantillon (10) insérée dans cet élément de réception d'ampoule (77) puisse être amenée en contact avec l'extrémité prescrite dudit embout de pipetage (19) durant le pipetage.
